# EUROPEAN PATENT APPLICATION

(11) **EP 2 804 245 A1**
(43) Date of publication of application: **19.11.2014**
(21) Application number: 12864796.3
(22) Date of filing: 26.12.2012
(51) Int. Cl.: H01M 8/02, H01M 8/10, H01M 8/12

(54) **FUEL CELL**

(30) Priority: 11.01.2012 JP 2012003050
(71) Applicant: Nissan Motor Co., Ltd, Yokohama-shi, Kanagawa 221-0023 (JP)
(72) Inventor: HIMENO, Tomokatsu, Yokohama-shi Kanagawa 221-0023 (JP)
(74) Representative: Osha Liang SARL
(86) International application number: PCT/JP2012/083691
(87) International publication number: WO 2013/105441

(57) **Abstract**

A fuel cell includes a membrane electrode assembly forming a catalytic reaction plane region; a gas diffusion layer disposed on a main surface of the membrane electrode assembly; a separator disposed on a main surface of the gas diffusion layer; an electroconductive member, which is disposed between the gas diffusion layer and the separator and outside the catalytic reaction plane region, and which electrically connects the gas diffusion layer and the separator; and a penetration resistance reduction means for making a penetration resistance between the gas diffusion layer and the separator, passing through the electroconductive member, smaller than that between the gas diffusion layer and the separator in the catalytic reaction plane region.

## Description

### TECHNICAL FIELD

The present invention relates to fuel cells. More specifically, the present invention relates to a fuel cell that can achieve excellent power generation performance, while suppressing corrosion thereof.

### BACKGROUND ART

Conventionally, in order to provide a polymer electrolyte fuel cell with high power generation efficiency at low cost, the following polymer electrolyte fuel cell is proposed. That is, the polymer electrolyte fuel cell includes a stacked body composed of a membrane electrode assembly, gas diffusion layers, fluid passage layers for forming fluid passages, and metallic cooling plates. The polymer electrolyte fuel cell also includes a current collection member for extracting a generated power output from the membrane electrode assembly by being brought into conduction with the gas diffusion layers; and a seal member for hermetically interrupting and sealing the current collection member from the fluid passages of the fluid passage layers to electrically insulate the fluid passage layer with the cooling plate (see Patent Document 1).

Further, conventionally it is proposed to decrease an electric resistance by performing surface processing on a separator or gas diffusion layer opposed to a catalytic reaction plane region (also referred to as an active area) (see Patent Document 2).

### CITATION LIST

### PATENT DOCUMENTS

Patent Document 1: Japanese Patent Unexamined Publication No. 2010-108759
Patent Document 2: Japanese Patent Unexamined Publication No. 2007-134107

### SUMMARY OF INVENTION

### Technical Problem

However, the polymer electrolyte fuel cell disclosed in the above-mentioned patent document 1 has a problem of a large increase in cell resistance.

The polymer electrolyte fuel cell disclosed in the above patent document 2 has the problem of a large increase in cell resistance, disadvantageously reducing power generation performance due to corrosion of a part undergoing the surface processing. The surface processing which is applied to the fuel cell is very expensive, and takes a great number of the processing steps, which leads to high cost.

The present invention has been made in view of the foregoing problems in the related art. The object of the present invention is to provide a fuel cell that can reduce a cell resistance without the need of the surface processing as one cause of the corrosion, that is, a fuel cell that can achieve excellent power generation performance while suppressing corrosion in the fuel cell.

### Solution to Problem

The inventors have diligently investigated in order to achieve the object described above. As a result, it has been found that, when a penetration resistance between a gas diffusion layer and a separator of a conductive member, which are disposed in a predetermined position, satisfies a specific relationship, the above object is achieved, whereby the invention has been made in view of the above fact.

That is, a fuel cell of the present invention includes: a membrane electrode assembly forming a catalytic reaction plane region; a gas diffusion layer disposed on a main surface of the membrane electrode assembly; a separator disposed on a main surface of the gas diffusion layer; an electroconductive member disposed between the gas diffusion layer and the separator and outside the catalytic reaction plane region, the electroconductive member electrically connecting the gas diffusion layer and the separator; and a penetration resistance reduction means for making a penetration resistance between the gas diffusion layer and the separator, passing through the electroconductive member, smaller than a penetration resistance between the gas diffusion layer and the separator in the catalytic reaction plane region.

### Advantageous Effect of Invention

According to the present invention, a penetration resistance between the gas diffusion layer and the separator of the conductive member, which are disposed in a predetermined position, is controlled to satisfy a specific relationship, which provides the fuel cell that can achieve the excellent power generation performance, while suppressing corrosion thereof.

### BRIEF DESCRIPTION OF DRAWINGS

FIG. 1 is an explanatory diagram showing a planar state representing a catalytic reaction plane region and a conductive member of a fuel cell according to the first embodiment of the present invention;
FIG. 2 is an explanatory diagram showing a sectional state of a part of a fuel cell according to the first embodiment of the invention.
FIG. 3 is an explanatory diagram showing a planar state representing a catalytic reaction plane region and a conductive member of a fuel cell according to the second embodiment of the present invention;
FIG. 4 is an explanatory diagram showing a sectional state of a part of the fuel cell of the second embodiment;
FIG. 5 is an explanatory diagram showing a planar state representing a catalytic reaction plane region and a conductive member of a fuel cell according to the third embodiment of the present invention;
FIG. 6 is an explanatory diagram showing a planar state representing a catalytic reaction plane region and a conductive member of a fuel cell according to the fourth embodiment of the present invention;
FIG. 7 is an explanatory diagram showing a planar state representing a catalytic reaction plane region and a conductive member of a fuel cell according to the fifth embodiment of the present invention;
FIG. 8 is an explanatory diagram showing a planar state representing a catalytic reaction plane region and a conductive member of a fuel cell according to the sixth embodiment of the present invention; and
FIG. 9 is an explanatory diagram showing a sectional state of a part of a fuel cell according to the seventh embodiment of the present invention.

### DESCRIPTION OF EMBODIMENTS

In the following, a fuel cell according to an embodiment of the present invention will be described in details with reference to the accompanying drawings. The ratio of dimension in the drawings cited in the following embodiments is exaggerated for purposes of illustration, and thus is sometimes different from the actual one.

### (First Embodiment)

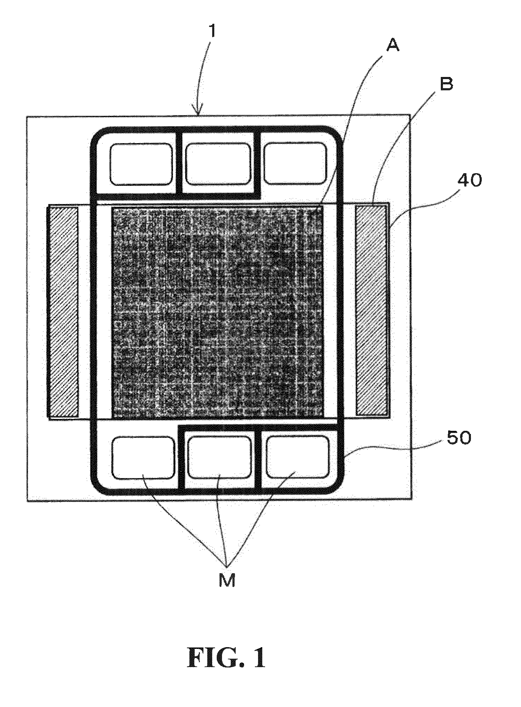

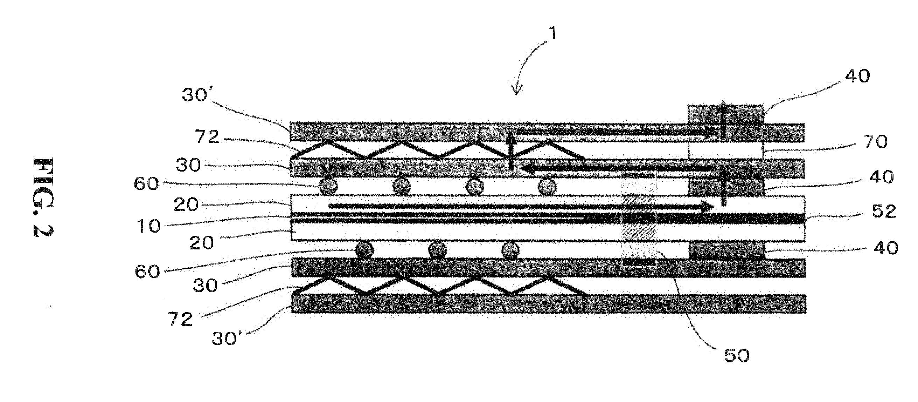

FIG. 1 is an explanatory diagram showing a planar state representing a catalytic reaction plane region and a conductive member of a fuel cell according to the first embodiment of the present invention. FIG. 2 is an explanatory diagram showing a sectional state of a part of a fuel cell of the first embodiment.

As shown in Fig. 1, in a fuel cell 1 of this embodiment, electroconductive members 40 are disposed outside a catalytic reaction plane region A. In addition, as shown in Fig. 1, in the fuel cell 1 of this embodiment, gas seal members 50 and 52 formed of conventionally known material are disposed outside the catalytic reaction plane region A, and on the side of the catalytic reaction plane region A with respect to the electroconductive member 40 (see Fig. 2). Further, the fuel cell 1 has manifolds M for fuel gas, oxidant gas, and refrigerant.

As shown in Fig. 2, the fuel cell 1 of this embodiment includes a membrane electrode assembly 10 forming the catalytic reaction plane region A; gas diffusion layers 20 provided on the main surfaces of the membrane electrode assembly 10; separators 30 disposed on the main surface of the gas diffusion layers 20; and electroconductive members 40 which are disposed between the gas diffusion layer 20 and the separator 30 and outside the catalytic reaction plane region A, and which electrically connect the gas diffusion layer 20 and the separator 30.

Further, as shown in FIG. 2, the fuel cell 1 includes gas passage formation members 60 disposed between the gas diffusion layer 20 and the separator 30 and inside the catalytic reaction plane region A; other separators 30' disposed on the main surfaces of the separators 30; an elastic member 70, which is disposed between the separator 30 and another separator 30', and outside the catalytic reaction plane region A, and which relieves stress generated between the separator 30 and the other separator 30'; and conductive members 72 for electrically connecting the separator 30 and the other separator 30'.

The fuel cell of this embodiment further includes penetration resistance reducing means for making a penetration resistance between the gas diffusion layer 20 and the separator 30 through the electroconductive member 40 smaller than a penetration resistance between the gas diffusion layer 20 and the separator 30 in the catalytic reaction plane region A. That is to say, the penetration resistance value of the electroconductive member 40 is set smaller than that of the gas passage formation member 60 serving as one example of the penetration resistance reducing means.

The fuel cell of this embodiment satisfies such a specific relationship, and thus can achieve the excellent power generation performance, while effectively suppressing the corrosion of the fuel cell.

This is because the electroconductive member with the penetration resistance satisfying the specific relationship is disposed outside the catalytic reaction plane region, and therefore it is not necessary to establish the conduction in the catalytic reaction plane region, and thus the surface processed layer, which is one cause for corrosion, is not necessary.

The fuel cell of this embodiment has the configuration, in which the electroconductive member is disposed in an outer peripheral area of the catalytic reaction plane region, and thus can achieve the excellent power generation performance, while effectively suppressing the corrosion thereof. Moreover, the fuel cell has another advantage of reduction in cost.

Further, the fuel cell of this embodiment has the configuration, in which the gas seal member is disposed outside the catalytic reaction plane region and on the side of the catalytic reaction plane region with respect to the electroconductive member. Therefore, the fuel cell can relieve the corrosive environment of the conductive member to suppress the increase in resistance, thereby achieving more excellent power generation performance, while effectively suppressing the corrosion thereof.

The fuel cell of this embodiment has the configuration, in which the gas passage formation member is disposed between the gas diffusion layer and the separator and in the catalytic reaction plane region. Therefore, the fuel cell can satisfy the specific relationship regarding the penetration resistance, thereby achieving more excellent power generation performance, while effectively suppressing the corrosion thereof.

Further, the fuel cell of this embodiment has the configuration, in which the elastic member is provided between one separator and another separator and outside the catalytic reaction plane region, and the elastic member relieves the stress generated between the separator and the other separator. Therefore, shock between the separators can be absorbed. The elastic member may be, for example, fluoro rubber, polyisobutylene rubber, silicone rubber, and the like.

### (Second Embodiment)

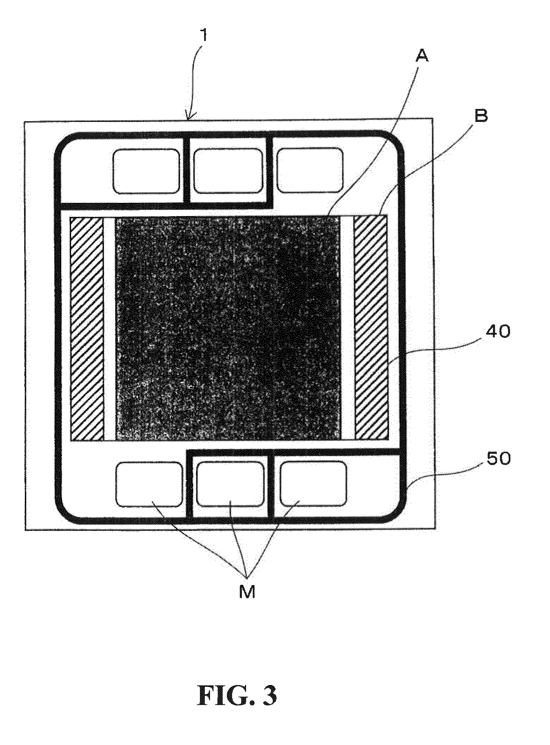

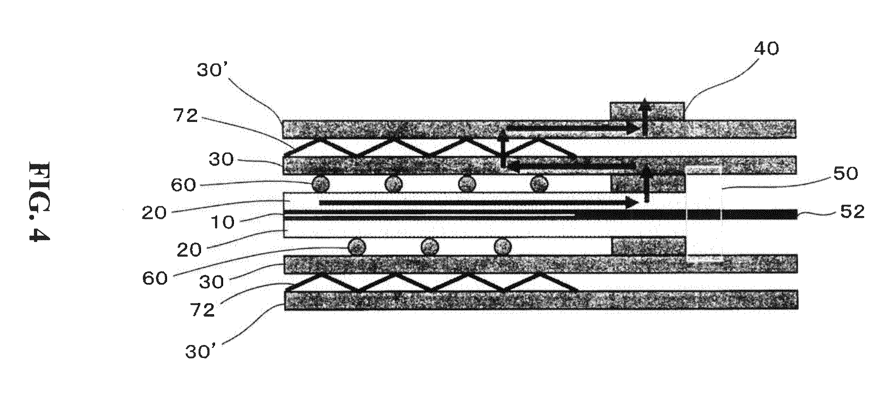

FIG. 3 is an explanatory diagram showing a planar state representing a catalytic reaction plane region and a conductive member of a fuel cell according to the second embodiment of the present invention. FIG. 4 is an explanatory diagram showing a sectional state of a part of the fuel cell of the second embodiment. The same or equal components in this embodiment as those described in the first embodiment are designated by the same reference characters, and thus the description thereof will be omitted below.

As shown in FIGs 3 and 4, the fuel cell of this embodiment differs from that of the first embodiment in the following points: (1) a gas seal member 50 is disposed outside the electroconductive member 40; and (2) the fuel cell is not provided with the elastic member 70, which is disposed between the separator 30 and the other separator 30' and outside the catalytic reaction plane region A, and which relieves the stress generated between the separators 30 and the other separator 30'.

The fuel cell of this embodiment satisfies the above-mentioned specific relationship, and thus can achieve the excellent power generation performance, while effectively suppressing the corrosion of the fuel cell.

This is because the electroconductive member with the penetration resistance satisfying the specific relationship is disposed outside the catalytic reaction plane region, and therefore it is not necessary to establish the conduction in the catalytic reaction plane region, and thus the surface processed layer, which is one cause for corrosion, is not necessary.

The fuel cell of this embodiment has the configuration, in which the electroconductive member is disposed in an outer peripheral area of the catalytic reaction plane region, and thus can achieve the excellent power generation performance, while effectively suppressing the corrosion thereof. Further, the fuel cell has another advantage of reduction in cost.

The fuel cell of this embodiment has the configuration, in which the gas passage formation member is provided between the gas diffusion layer and the separator and in the catalytic reaction plane region. Therefore, the fuel cell can satisfy the specific relationship regarding the penetration resistance, thereby achieving the excellent power generation performance, while effectively suppressing the corrosion thereof.

### (Third to Fifth Embodiments)

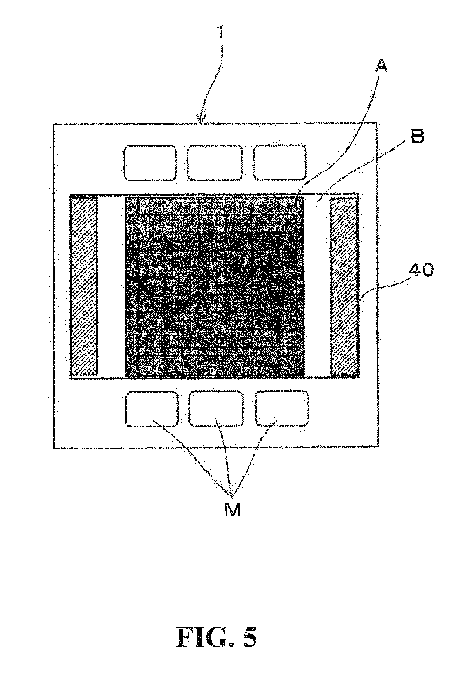

FIGs 5 to 7 are explanatory diagrams showing a planar state representing a catalytic reaction plane region and a conductive member of fuel cells according to third to fifth embodiments of the present invention. The same or equal components in these embodiments as those described in the first and second embodiments are designated by the same reference characters, and thus the description thereof will be omitted below.

As shown in FIG. 5, in the fuel cell of the third embodiment, two electroconductive members 40 are disposed in an outer peripheral area B of the catalytic reaction plane region A, and can be configured not to interfere with any flow passages formed of the manifolds M for the fuel gas, oxidant gas, refrigerant, and the like, so that the fuel cell can adopt a simple structure.

Thus, the fuel cell can achieve the excellent power generation performance, while effectively suppressing the corrosion of the fuel cell. Further, the fuel cell has another advantage of reduction in cost.

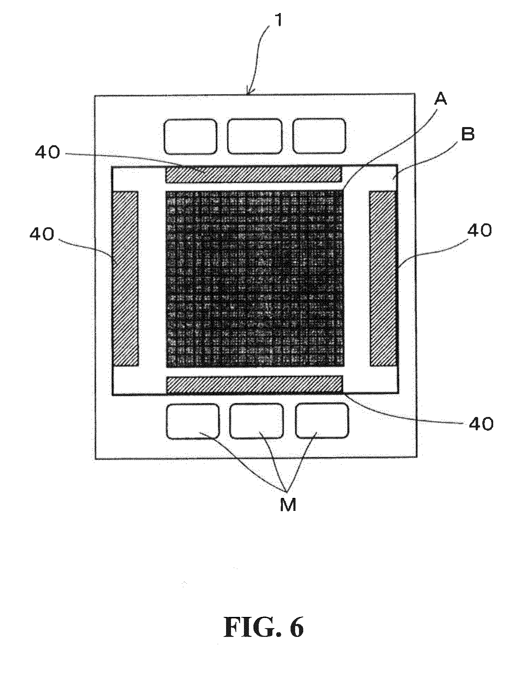

As shown in FIG. 6, in the fuel cell of the fourth embodiment, four conductive members 40 are disposed in an outer peripheral area B of the catalytic reaction plane region A. Two of those conductive members 40 interfere with the flow passages formed of the manifolds M for the fuel gas, oxidant gas, refrigerant, and the like. However, because a diffuser member in the flow passages of fuel gas, oxidant gas, and refrigerant serves as the electroconductive member 40, relatively simple structure can be employed.

Thus, the fuel cell can achieve the excellent power generation performance, while effectively suppressing the corrosion of the fuel cell. Further, the fuel cell has another advantage of reduction in cost.

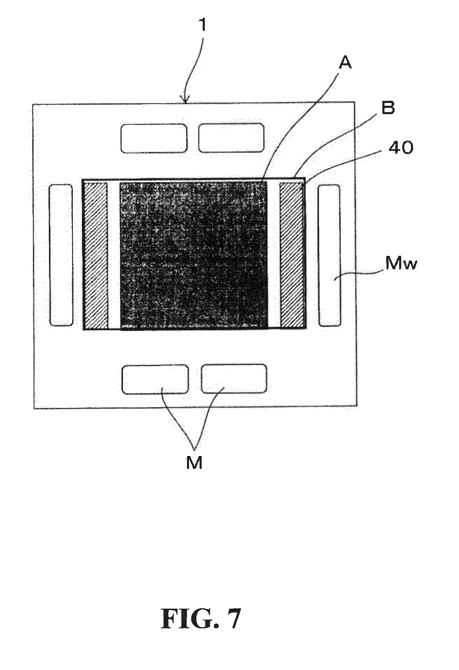

As shown in FIG. 7, in the fuel cell of the fifth embodiment, four conductive members 40 are disposed in the outer peripheral area B of the catalytic reaction plane region A. Among those conductive members, two conductive members 40 interfere with the flow passages formed of the manifolds Mw for the refrigerant. The manifold member in the flow passage for the refrigerant or the like can also serve as the electroconductive member 40, which can provide the relatively simple structure.

Thus, the fuel cell can achieve the excellent power generation performance, while effectively suppressing the corrosion of the fuel cell. Further, the fuel cell has another advantage of reduction in cost.

### (Sixth Embodiment)

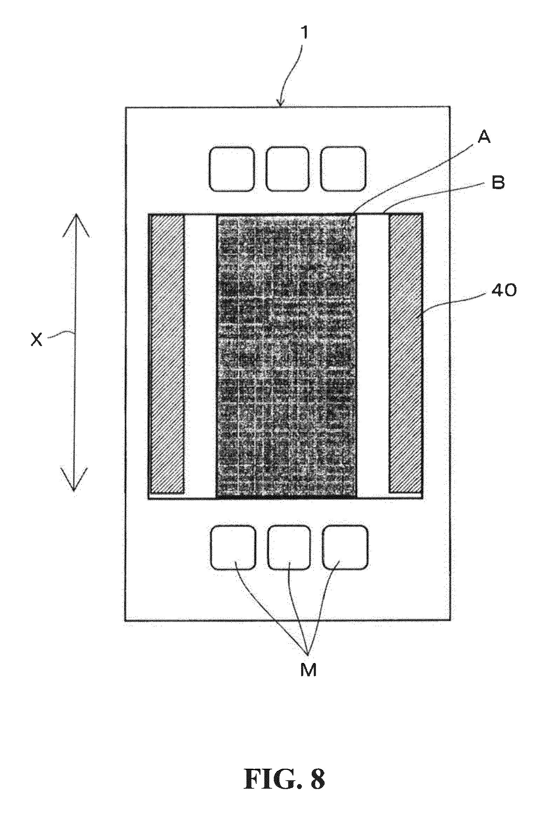

FIG. 8 is an explanatory diagram showing a planar state representing a catalytic reaction plane region and a conductive member of a fuel cell according to the sixth embodiment of the present invention. The same or equal components in this embodiment as those described in the first to fifth embodiments are designated by the same reference characters, and thus the description thereof will be omitted below.

As shown in FIG. 8, in the fuel cell of this embodiment, two electroconductive members are disposed in an outer peripheral area B of the catalytic reaction plane region A, especially, along the longitudinal direction X of the catalytic reaction plane region.

Thus, an electron transfer distance from the catalytic reaction plane region to the electroconductive member is relatively shorter to decrease an electric resistance.

As a result, the fuel cell can achieve the excellent power generation performance, while effectively suppressing the corrosion of the fuel cell. For the same reasons described above, the fuel cell has another advantage of reduction in cost.

### (Seventh Embodiment)

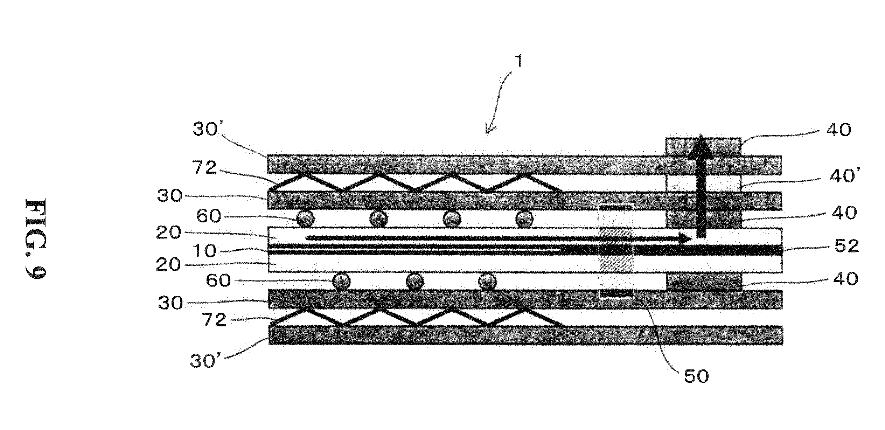

FIG. 9 is an explanatory diagram showing a sectional state of a part of a fuel cell according to the seventh embodiment of the present invention. The same or equal components in this embodiment as those described in the first to sixth embodiments are designated by the same reference characters, and thus the description thereof will be omitted below.

As shown in FIG. 9, the fuel cell of this embodiment differs from that of the above-mentioned embodiments in the following points: (1) another electroconductive member 40', disposed between the separator 30 and another separator 30' and outside the catalytic reaction plane region A, is provided to electrically connect the separator 30 to the other separator 30', and (2) a conductive member 72, as one example of another penetration resistance reduction means, is provided to make a penetration resistance between the separator 30 and the other separator 30', passing through said another electroconductive member 40 smaller than a penetration resistance between the separator 30 and the other separator 30' in the catalytic reaction plane region A. That is, the penetration resistance of the electroconductive member 40 is set smaller than that of the conductive member 72, as one example of the penetration resistance reduction means.

The fuel cell of this embodiment satisfies the above-mentioned specific relationship, and thus can achieve the excellent power generation performance, while effectively suppressing the corrosion of the fuel cell.

This is because the electroconductive member with the penetration resistance satisfying the specific relationship is disposed outside the catalytic reaction plane region, and therefore it is not necessary to establish the conduction in the catalytic reaction plane region, and thus the surface processed layer, which is one cause for corrosion, is not necessary.

The fuel cell of this embodiment has the configuration, in which the electroconductive member is disposed in an outer peripheral area of the catalytic reaction plane region, and thus can achieve the excellent power generation performance, while effectively suppressing the corrosion thereof. Further, the fuel cell has another advantage of reduction in cost.

Since the other conductive member with the specific relationship is located in a predetermined position, the electron transfer distance from the catalytic reaction plane region to the electroconductive member is relatively shorter, and thus can decrease the electric resistance of the fuel cell.

The fuel cell of this embodiment has the configuration, in which the gas passage formation member is disposed between the gas diffusion layer and the separator and in the catalytic reaction plane region. Therefore, the fuel cell can satisfy the specific relationship regarding the penetration resistance, thereby achieving the excellent power generation performance, while effectively suppressing the corrosion thereof.

In the following, the components of the respective embodiments will be described in detail.

### [Membrane Electrode Assembly]

The membrane electrode assembly 10 includes a polymer electrolyte membrane, and a pair of electrode catalyst layers holding the polymer electrolyte membrane therebetween.

### (Polymer electrolyte membrane)

The polymer electrolyte membrane has a function of allowing protons generated in an anode electrode catalyst layer to selectively pass through to a cathode electrode catalyst layer along a thickness direction thereof in operation of the fuel cell (stack). The polymer electrolyte membrane also has another function as a partition for preventing mixing of fuel gas supplied to the anode side with oxidant gas supplied to the cathode side.

The polymer electrolyte membrane is classified into main types of a fluorocarbon based polymer electrolyte membrane and a hydrocarbon based polymer electrolyte membrane according to the kind of an ion-exchange resin as constitutional material.

Ion-exchange resins for the fluorocarbon based polymer electrolyte membrane includes, for example, a perfluorocarbon sulfonic acid based polymer, such as NAFION, Aciplex (registered trademark, manufactured by Asahi Kasei Chemicals Corporation), FLEMION (registered trademark, manufactured by Asahi Glass Co., LTD.), a perfluorocarbon phosphonic acid based polymer, a trifluorostyrene sulfonic acid based polymer, an ethylene tetrafluoroethylene-g-styrene sulfonic acid based polymer, an ethylene-tetrafluoroethylene copolymer, and a polyvinylidenefluoride-perfluorocarbon sulfonic acid based polymer.

From the viewpoint of improving the power generation performance, including heat resistance, chemical stability, and the like, those fluorocarbon based polymer electrolyte membranes are preferably used, and more preferably, the fluorocarbon based polymer electrolyte membrane formed of perfluorocarbon sulfonic acid based polymer is used.

Ion-exchange resins for the hydrocarbon based electrolyte membrane includes, for example, sulfonated polyethersulfone (S-PES), sulfonated polyaryletherketone, sulfonated polybenzimidazolealkyl, phosphonated polybenzimidazolealkyl, sulfonated polystyrene, sulfonated polyether-ether ketone (S-PEEK), sulfonated polyphenylene (S-PPP), and the like.

Those hydrocarbon based polymer electrolyte membranes are preferably used from the viewpoint of inexpensive raw material, simple manufacturing steps, and broad choices of the material.

Only one kind of the above ion-exchange resin may be singly used, or two or more kinds of the ion-exchange resins may be used in combination.

Material for the polymer electrolyte membrane is not limited to the above-mentioned, and other material can also be used.

The thickness of the polymer electrolyte membrane is not specifically limited, and may be appropriately determined taking into consideration the characteristics of the fuel cell obtained. The thickness of the polymer electrolyte membrane is normally in a range of 5 to 300 µm. When the thickness of polymer electrolyte membrane is within such a numerical range, the membrane strength when manufactured, the durability of the membrane when used, and the balance of output characteristics in use thereof can be appropriately controlled.

### (Electrode Catalyst Layer)

The electrode catalyst layer (anode electrode catalyst layer, cathode electrode catalyst layer) includes an electrode catalyst containing a conductive carrier and catalyst particles supported on the surface of the conductive carrier, and an ionomer covering the electrode catalyst. The electrode catalyst layer is a layer where a cell reaction proceeds. Specifically, an oxidation reaction of hydrogen proceeds in the anode electrode catalyst layer, while a reduction reaction of oxygen proceeds in the cathode electrode catalyst layer.

### (Catalyst Particles)

The catalyst particles used in the anode electrode catalyst layer may be any catalyst particles having a catalytic action on an oxidation reaction of hydrogen, and, for example, they may be a conventionally known catalyst. The catalyst particles used in the cathode electrode catalyst layer may also be any catalyst particles having a catalytic action on a reduction reaction of oxygen, and, for example, they may be a conventionally known catalyst.

Specific examples of the catalyst particles include at least one kind of particles selected from the group consisting of platinum (Pt), ruthenium (Ru), iridium (Ir), rhodium (Rh), palladium (Pd), osmium (Os), tungsten (W), lead (Pb), iron (Fe), chromium (Cr), cobalt (Co), nickel (Ni), manganese (Mn), vanadium (V), molybdenum (Mo), gallium (Ga), and aluminum (Al). Alternatively, the catalyst particles may be a mixture or an alloy of any combination of the above elements.

In order to improve catalytic activity, poisoning resistance to carbon monoxide, heat resistance, and the like, the catalyst particles containing at least platinum is preferably used.

The composition of the above-mentioned alloy depends on the kind of metal to be converted into an alloy. Preferably such alloy contains 30 to 90 atomic% of platinum, and 10 to 70 atomic% of a metal element to be mixed with platinum into the alloy.

The "alloy" as used herein generally means material which is made by adding one or more kinds of metallic elements to another metal element, and which has metallic characteristics.

Alloys are classified in an eutectic alloy which is a kind of mixture of individual crystals of each component element, a solid solution in which components of the alloy are completely dissolved together, and an intermetallic compound or a compound of a metal and a nonmetal element. Any of the above mentioned alloy may be used in the present invention.

The catalyst particles used for the anode electrode catalyst layer and the catalyst particles used for the cathode electrode catalyst layer can be appropriately selected from the above-mentioned.

In the present invention, unless otherwise specified, the same definition and explanation are applied to the catalyst particles for the anode electrode catalyst layer and the cathode electrode catalyst layer.

Such catalyst particles are collectively referred to as the "catalyst particles". However, the catalyst particles of the anode electrode catalyst layer and the catalyst particles of the cathode electrode catalyst layer are not necessarily the same, and can be appropriately selected respectively so as to exhibit the desired effects as mentioned above.

The size of the catalyst particle is not specifically limited. The catalyst particle can have substantially the same size as that of a conventionally known catalyst.

An average particle size of the catalyst particle is preferably in a range of 1 to 30 nm.

The use of the catalyst particle having an average particle size in such a range makes it possible to appropriately control the balance between the ease of supporting the catalyst and the catalyst utilization rate regarding an effective electrode area where an electrochemical reaction proceeds.

"Average particle diameter of catalyst particles" can be measured as a crystallite diameter determined from a full width at half maximum of a diffraction peak of the catalyst particle by means of X-ray diffraction, or as an average of particle diameters of catalyst particles obtained by a transmission electron microscope image.

### (Conductive Carrier)

The conductive carrier is not specifically limited so long as it functions as a carrier for supporting the above-mentioned catalyst particles, and also as an electron transfer path for sending and receiving electrons between the catalyst particles and the other members. Thus, a conventionally known conductive carrier can be used in the same way.

The conductive carrier may be any carrier, so long as it has a specific surface area for supporting the catalyst particles in a desired dispersed state, and it has sufficient electron conductivity. A main component of the conductive carrier is preferably carbon.

Specific examples of the conductive carries include carbon black, such as acetylene black, channel black, oil (gas) furnace black (for example, vulcan etc.), lamp black, thermal black, and Ketjen black, black pearl, graphitized acetylene black, graphitized channel black, graphitized oil (gas) furnace black (for example, vulcan etc.), graphitized lamp black, graphitized thermal black, graphitized Ketjen black, graphitized black pearl, carbon nanotube, carbon nanofiber, carbon nanohorn, carbon fibril, activated carbon, coke, natural graphite, synthetic graphite, and the like.

"A main component is carbon" as used herein means that a carbon atom is contained as a main component, and the carrier may be composed of only carbon atoms, or the carrier may be substantially composed of carbon atoms. In some cases, in order to improve the characteristics of the fuel cell, an element other than carbon atoms may be contained.

"Substantially composed of carbon atoms" as used herein means that contamination by 2 to 3 % by mass or less of impurities is allowed.

A BET specific surface area of the conductive carrier is preferably a specific surface area sufficient to highly disperse and support the catalyst particles. The BET specific surface area of the conductive carrier is preferably in a range of 20 to 1600 m²/g, and more preferably in a range of 80 to 1200 m²/g.

When the conductive carrier has the specific surface area in such a numerical range, it is possible to appropriately control the balance between the dispersibility of the catalyst particles in the conductive carrier and the effective utilization rate of the catalyst particles.

The size of the conductive carrier is not specifically limited. However, from the viewpoint of controlling the ease of supporting the catalyst, the utilization rate of the metal particles as a catalyst, and the thickness of the electrode catalyst layer in appropriate ranges, the average particle size of the conductive carrier is preferably in a range of about 5 to 200 nm, and more preferably about 10 to 100 nm.

A support concentration of the catalyst particles on the conductive carrier is preferably in a range of 10 to 80 % by mass, and more preferably in a range of 30 to 70 % by mass with respect to the whole amount of the electrode catalyst. When the support concentration of the catalyst particles is in such a numerical range, it is possible to appropriately control the balance between the dispersibility of the catalyst particles on the conductive carrier and the catalyst performance.

The support concentration of the catalyst particles in the conductive carrier can be measured by an inductively coupled plasma atomic emission spectroscopy (ICP).

### (Ionomer)

As the ionomer, for example, fluorocarbon based polymer electrolyte material and hydrocarbon based polymer electrolyte material may be used.

The ionomer is classified into main types of fluorocarbon based polymer electrolyte material and hydrocarbon based polymer electrolyte material, according to the kind of the ion-exchange resin as constitutional material.

Ion-exchange resins for the fluorocarbon based polymer electrolyte material include, for example, a perfluorocarbon sulfonic acid based polymer, such as NAFION, Aciplex and FLEMION, a perfluorocarbon phosphonic acid based polymer, a trifluorostyrene sulfonic acid based polymer, an ethylene tetrafluoroethylene-g-styrene sulfonic acid based polymer, an ethylene-tetrafluoroethylene copolymer, and a polyvinylidenefluoride-perfluorocarbon sulfonic acid based polymer.

From the viewpoint of improving the power generation performance, including heat resistance, chemical stability, and the like, those fluorocarbon based polymer electrolyte material are preferably used, and more preferably perfluorocarbon sulfonic acid based polymer is used.

Ion-exchange resins for the hydrocarbon based polymer electrolyte material include, for example, sulfonated polyethersulfone (S-PES), sulfonated polyaryletherketone, sulfonated polybenzimidazolealkyl, phosphonated polybenzimidazolealkyl, sulfonated polystyrene, sulfonated polyether-ether ketone (S-PEEK), sulfonated polyphenylene (S-PPP), and the like.

Those hydrocarbon based polymer electrolyte material are preferably used from the viewpoint of manufacturing advantages, including inexpensive raw material, simple manufacturing steps, and broad choices of the material.

Only one kind of the above ion-exchange resin may be singly used, or two or more kinds of the ion-exchange resins may be used in combination.

Material for the ionomer is not limited to the above-mentioned, and other material can also be used.

As mentioned above, an ion exchange equivalent (EW) of the ionomer in the electrode catalyst layer is preferably 800 or less.

With this configuration, the proton transfer resistance of the electrode catalyst layer can be reduced, thereby achieving the better current and voltage characteristics.

However, the present invention is not limited to the appropriate numerical range described above.

### [Gas Diffusion Layer]

The gas diffusion layers 20 (anode gas diffusion layer, cathode gas diffusion layer) have a function of promoting diffusion of the gas (fuel gas or oxidant gas), supplied via the gas flow passage of the separator, into the electrode catalyst layer, and another function of serving as an electronic transfer path.

Material for the gas diffusion layer is not specifically limited, and conventionally known findings in the related art can be appropriately referred. For example, a porous metal member with electro conductivity and porosity, such as a wire fabric, a metal mesh, a punching metal and an expanding metal, is employed.

In particular, from the viewpoint of ensuring the electro conductivity and mechanical strength, the metal material can be preferably employed.

The gas diffusion layer preferably contains a water repellent for the purpose of preventing flooding phenomena and the like by enhancing the repellency thereof.

The water repellent includes fluorocarbon based polymer material and olefin based polymer material, but they are not limited thereto.

The fluorocarbon based polymer material includes, for example, polytetrafluoroethylene (PTFE), polyvinylidenefluoride (PVDF), polyhexafluoropropylene (PHFP), tetrafluoroethylene-hexafluoropropylene copolymer (TFE-HFP), and the like.

The olefin based polymer material includes, for example, polypropylene (PP) and polyethylene (PE), and the like.

### [Separator]

Any material can be used for the separator 30, so long as it is made of metal.

For example, when stainless with excellent corrosion resistance, such as SUS316L, is employed as the separator, the separator itself is corrosion resistant under a corrosive environment in the fuel cell.

From the viewpoint of reducing the thickness and cost, aluminum, which is more advantageous in reducing thickness and weight compared to stainless, can be applied to the separator.

Metal constituting the separator is not specifically limited. Any material conventionally used for the metal separator can be appropriately used.

The material for the separator includes, for example, iron (Fe), titanium (Ti), aluminum (Al), and an alloy thereof.

Those material is preferably used from the viewpoint of the mechanical strength, general versatility, cost performance, good processibility, and the like. Here, iron alloy includes stainless.

Among the above material, the separator is preferably formed of stainless, aluminum or aluminum alloy. The separator formed of stainless can sufficiently ensure the electro conductivity of a contact surface with a gas diffusion layer base, which is a constitutional material of the above-mentioned gas diffusion layer. As a result, even when water invades a gap of a membrane at a rib shoulder, durability of the fuel cell is maintained, due to the corrosion resistance of an oxide coating generated on a separator base itself, which is made of stainless.

Here, the gas diffusion layer is composed of a part to which a surface pressure is directly applied (contacting part with the separator; rib part), and the other part to which a surface pressure is not directly applied (non-contacting part; flow passage). The rib shoulder means the contacting part with the separator, that is, a shoulder portion (corner) of the rib part.

The rib part can be separately formed by using a wire. The wire may be either a conductive or insulating wire, but preferably the insulating wire is used from the viewpoint of promoting electron transfer to the electroconductive member.

Stainless includes, for example, austenite-based, martensite-based, ferrite-based, austenite-ferrite based, and precipitation-hardened stainless.

Austenite-based stainless includes, for example, SUS201, SUS202, SUS301, SU302, SUS303, SUS304, SUS305, SUS316 (L) and SUS317.

Austenite-ferrite-based stainless includes, for example, SUS329J1.

Martensite-based stainless includes, for example, SUS403 and SUS420.

Ferrite-based stainless includes, for example, SUS405, SUS430 and SUS430LX.

Precipitation-hardened stainless includes, for example, SUS630.

Among the stainless material described above, the austenite-based stainless, such as SUS304 and SUS316, is more preferably used. An iron (Fe) content of the stainless is preferably in a range of 60 to 84 % by mass, and more preferably in a range of 65 to 72 % by mass. A chromium (Cr) content of the stainless is preferably in a range of 16 to 20 % by mass, and more preferably in a range of 16 to 18 % by mass.

Aluminum alloys include, for example, pure aluminum based, an aluminum-manganese based, and an aluminum-magnesium based alloy.

Other elements than aluminum contained in the aluminum alloy may be any elemens, so long as they can be generally used in aluminum alloy. For example, copper (Cu), manganese (Mn), silicon (Si), magnesium (Mg), zinc (Zn), nickel (Ni), and the like can be contained in the aluminum alloy.

Specific examples of the aluminum alloy include A1050 and A1050P as the pure aluminum based alloy, A3003P and A3004P as the aluminum-manganese based alloy, and A5052P and A5083P as the aluminum-magnesium based alloy. The separator is required to have adequate mechanical strength and moldability. For this reason, in addition to the choice of the alloy type, the thermal refining of the alloy can be appropriately selected. When the separator base is formed of a simple substance of titanium or aluminum, the purity of titanium or aluminum is preferably 95 % by mass or more, more preferably 97 % by mass or more, and most preferably 99 % by mass.

The thickness of the separator is not specifically limited. From the viewpoint of improving the processibility, mechanical strength, and energy density of the cell by thinning the separator itself, the thickness of the separator is preferably in a range of 50 to 500 µm, more preferably in a range of 80 to 300 µm, and most preferably in a range of 80 to 200 µm.

In particular, when the separator base is formed using stainless as constitutional material, the thickness of the separator base is preferably in a range of 80 to 150 µm. On the other hand, when the separator is formed using aluminum as constitutional material, the thickness of the separator is preferably in a range of 100 to 300 µm. When the thickness of the separator is in the above numerical range, the separator can achieve the excellent processibility with the appropriate thickness, while having a sufficient strength as a separator.

For example, from the viewpoint of providing the constitutional material of the separator with the sufficient strength, the separator is preferably formed of material having high gas shielding property. The separator serves to partition the cells from each other, whereby different gases flow on both sides of the separator. Thus, from the viewpoint of preventing the mixing of adjacent gas flows in each cell of the respective cell units and the fluctuations in flow rate of gas, the separator preferably has the high gas shielding property.

Preferably, the above-mentioned gas diffusion layer base or separator, and the electroconductive member is brought into contact after the interface thereof is subjected to conductive surface processing, or they are bonded by welding.

The present invention has been described by some embodiments and examples. However, the present invention is not limited thereto. Various modifications can be made within the gist of the present invention.

In the above embodiments and examples, the polymer electrolyte fuel cell (PEFC) is explained as an example of a fuel cell. However, those explanation can be applied to various types of fuel cells, including a phosphoric acid type fuel cell (PAFC), a molten carbonate type fuel cell (MCFC), a solid oxide type fuel cell (SOFC), an alkaline type fuel cell (AFC), and the like.

For example, the configuration described in the above respective embodiments are not limited to each embodiment and example. That is, the configuration of the respective embodiments can be combined in other ways than the respective embodiments. In addition, the details of the configuration of the membrane electrode assembly and gas diffusion layer can be modified.

### REFERENCE SIGNS LIST

- 1: fuel cell
- 10: membrane electrode assembly
- 20: gas diffusion layer
- 30, 30': separator
- 40, 40': electroconductive member
- 50, 52: gas seal member
- 60: gas passage formation member
- 70: elastic member
- 72: conductive member
- A: catalytic reaction plane region
- B: outer peripheral area
- M: manifold

## Claims

1. A fuel cell, comprising:
a membrane electrode assembly forming a catalytic reaction plane region;
a gas diffusion layer disposed on a main surface of the membrane electrode assembly;
a separator disposed on a main surface of the gas diffusion layer;
an electroconductive member, which is disposed between the gas diffusion layer and the separator and outside the catalytic reaction plane region, and which electrically connects the gas diffusion layer and the separator; and
a penetration resistance reduction means for making a penetration resistance between the gas diffusion layer and the separator, passing through the electroconductive member, smaller than a penetration resistance between the gas diffusion layer and the separator in the catalytic reaction plane region.

2. The fuel cell according to claim 1, wherein the electroconductive member is disposed in an outer peripheral area of the catalytic reaction plane region.

3. The fuel cell according to claim 1 or 2, wherein the electroconductive member is disposed along a longitudinal direction of the catalytic reaction plane region.

4. The fuel cell according to any one of claims 1 to 3, further comprising a gas seal member disposed outside the catalytic reaction plane region, and on a side of the catalytic reaction plane region with respect to the electroconductive member.

5. The fuel cell according to any one of claims 1 to 4, wherein an interface between the electroconductive member and the gas diffusion layer as well as the separator is bonded, or is subjected to conductive surface processing to make contact therebetween.

6. The fuel cell according to any one of claims 1 to 5, wherein the gas diffusion layer is formed of a porous metal member.

7. The fuel cell according to any one of claims 1 to 6, further comprising a gas passage formation member disposed between the gas diffusion layer and the separator and in the catalytic reaction plane region.

8. The fuel cell according to any one of claims 1 to 7, further comprising:
another separator disposed on a main surface of the separator;
another electroconductive member, which is disposed between the separator and the another separator and outside the catalytic reaction plane region, and which electrically connects the separator and the another separator; and
another penetration resistance reduction means for making a penetration resistance between the separator and the another separator, passing through the another electroconductive member smaller, than a penetration resistance between the separator and the another separator in the catalytic reaction plane region.
